(19) **Europäisches Patentamt / European Patent Office / Office européen des brevets**

(11) **EP 4 685 186 A1**

(12) **EUROPEAN PATENT APPLICATION**
published in accordance with Art. 153(4) EPC

(43) Date of publication:
**28.01.2026   Bulletin 2026/05**

(21) Application number: **24775013.6**

(22) Date of filing: **25.03.2024**

(51) International Patent Classification (IPC):
*C08L 63/00* (2006.01)    *C08J 3/22* (2006.01)
*C08L 51/04* (2006.01)    *C08L 53/00* (2006.01)
*C08L 93/04* (2006.01)

(52) Cooperative Patent Classification (CPC):
C08J 3/22; C08L 51/04; C08L 53/00; C08L 63/00;
C08L 93/04

(86) International application number:
**PCT/JP2024/011593**

(87) International publication number:
**WO 2024/195880 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.03.2023   JP 2023046620**

(71) Applicant: **NIPPON STEEL CORPORATION**
**Chiyoda-ku**
**Tokyo 100-8071 (JP)**

(72) Inventors:
• **KANO, Kyohei**
**Tokyo 100-8071 (JP)**
• **ANEGAWA, Yuka**
**Tokyo 100-8071 (JP)**

(74) Representative: **Vossius & Partner**
**Patentanwälte Rechtsanwälte mbB**
**Siebertstrasse 3**
**81675 München (DE)**

(54) **EPOXY RESIN COMPOSITION AND METHOD FOR PRODUCING SAME**

(57)    Provided is an epoxy resin composition comprising a main agent containing an epoxy resin (A), a rosin-based resin (B) and a modifier for the epoxy resin (C), and a curing agent (D). Further, provided is a method of production of an epoxy resin composition comprising step 1 of mixing a curing agent (D) with a part of an epoxy resin (A) to prepare a resin composition, step 2 of charging the epoxy resin (A), a rosin-based resin (B) and a modifier for the epoxy resin (C) into a melting container and heating and mixing them at 140 to 170°C for 1 to 6 hours to obtain a master batch based on the melted (B) and (C) components, and step 3 of cooling the master batch obtained at step 2 to 50 to 70°C, then adding the resin composition obtained at step 1 and mixing them at 50 to 70°C for 0.5 to 2 hours to obtain an epoxy resin composition.

EP 4 685 186 A1

## Description

FIELD

The present invention relates to an epoxy resin composition and a method of production of the same.

BACKGROUND

An NVH material for automotive used to reduce noise (=N), vibration (=V), and unpleasant vibration and harshness (=H) such as when running on rough roads can absorb noise and prevent its entry into the passenger compartment and thereby prevent unpleasantness and improve riding comfort, and therefore is rising in demand. On the other hand, it is known that attenuation of vibration by a material having a double-layer structure is strongly affected by the properties of the materials forming the double-layer structure and the properties of the resin used as the adhesive at the interface of the materials.

In relation to this, PTL 1 describes an epoxy resin composition comprising component A: an epoxy resin having an oxazolidone ring structure in a molecule thereof; component B: an epoxy resin that is liquid at 30°C; component C: a diblock copolymer having a B-M structure where M represents a block formed of a homopolymer of methyl methacrylate or a copolymer containing at least 50 wt% of methyl methacrylate, B represents a block that is incompatible with the epoxy resins and the block M, and that has a glass transition temperature Tg of 20°C or less, and respective blocks represented by B and M are directly bonded to each other or are linked to each other through a linking group; and component D: an amine-based curing agent that is dicyandiamide or a derivative thereof, wherein blending ratios of the respective components satisfy A/(A+B)=0.05 to 0.25; C/(A+B)=0.12 to 0.19; and D/(A+B)=1 to 10 where A to D represent contents (masses) of the components A to D, respectively. Further, PTL 1 teaches that the acrylic block copolymer having a high damping property is suitably incorporated into the epoxy resin composition, and hence the composition has a high $\tan\delta$ (loss factor) in a wide temperature region while having high heat resistance, and accordingly the composition is excellent in damping property and attenuation property, and hence can be preferably used in applications such as a household electric appliance and a part for an automobile.

PTL 2 describes a viscoelastic resin for vibration damping material containing three components of (A) an epoxy resin, (B) a curing agent, and (C) a thermoplastic resin and describes that a rosin-based resin, etc., can be used as the thermoplastic resin. Further, PTL 2 teaches that by sandwiching the above viscoelastic resin for vibration damping material between two metal sheets, compared with conventional vibration damping materials, a high vibration damping performance and excellent adhesive performance are exhibited in a wide temperature range.

[CITATION LIST]

[PATENT LITERATURE]

[PTL 1] WO 2019/087877
[PTL 2] Japanese Unexamined Patent Publication No. 3-000759

SUMMARY

[TECHNICAL PROBLEM]

For example, in a resin composition such as described in PTLs 1 and 2, if increasing the amounts of the additive components to raise the vibration attenuation property (loss factor), the ratios of the epoxy resin and other components excellent in adhesive property fall. Therefore, the fact that the vibration attenuation property and adhesiveness are in a tradeoff relationship has been known since the past. For this reason, realizing both of these is generally difficult.

Therefore, the present invention has as its object to provide, by a novel constitution, an epoxy resin composition able to improve both the vibration attenuation property and adhesiveness and a method of production of the same.

[SOLUTION TO PROBLEM]

The inventors worked to achieve the above object based on an epoxy resin excellent in dynamic properties while focusing on a rosin-based resin for raising the vibration attenuation property and discovered that by adding this to the epoxy resin together with a modifier for the epoxy resin as a third component, an epoxy resin component improved in vibration attenuation property and excellent also in adhesiveness is obtained and thereby completed the present invention.

The present invention able to achieve the above object is as follows:

(1) An epoxy resin composition comprising a main agent containing an epoxy resin (A), a rosin-based resin (B) and a modifier for the epoxy resin (C), and a curing agent (D).

(2) The epoxy resin composition according to (1), wherein the modifier for the epoxy resin (C) includes at least one selected from core-shell type rubber particles and an acryl-based block copolymer.

(3) The epoxy resin composition according to (1) or (2), wherein the curing agent (D) includes an amine-based curing agent.

(4) The epoxy resin composition according to (3), wherein the curing agent (D) includes dicyandiamide.

(5) The epoxy resin composition according to any one of (1) to (4), wherein the rosin-based resin (B) is 10 to 180 parts by mass and the modifier for the epoxy resin (C) is 1 to 90 parts by mass with respect to 100 parts by mass of the epoxy resin (A).

(6) The epoxy resin composition according to (5), wherein the rosin-based resin (B) is 40 to 180 parts by mass and the modifier for the epoxy resin (C) is 10 to 50 parts by mass with respect to 100 parts by mass of the epoxy resin (A).

(7) A method of production of an epoxy resin composition comprising following steps 1 to 3:

step 1: mixing a curing agent (D) with a part of an epoxy resin (A) to prepare a resin composition,

step 2: charging the epoxy resin (A), a rosin-based resin (B) and a modifier for the epoxy resin (C) into a melting container and heating and mixing them at 140 to 170°C for 1 to 6 hours to obtain a master batch based on the melted (B) and (C) components, and

step 3: cooling the master batch obtained at step 2 to 50 to 70°C, then adding the resin composition obtained at step 1 and mixing them at 50 to 70°C for 0.5 to 2 hours to obtain an epoxy resin composition.

(8) The method of production of an epoxy resin composition according to (7), wherein the rosin-based resin (B) is 10 to 180 parts by mass and the modifier for the epoxy resin (C) is 1 to 90 parts by mass with respect to 100 parts by mass of the epoxy resin (A).

(9) The method of production of an epoxy resin composition according to (8), wherein the rosin-based resin (B) is 40 to 180 parts by mass and the modifier for the epoxy resin (C) is 10 to 50 parts by mass with respect to 100 parts by mass of the epoxy resin (A).

[ADVANTAGEOUS EFFECTS OF INVENTION]

According to the present invention, it is possible to provide an epoxy resin composition able to improve both the vibration attenuation property and adhesiveness and a method of production of the same.

BRIEF DESCRIPTION OF THE DRAWINGS

FIG. 1 is a schematic view showing a cured product of an epoxy resin composition including an epoxy resin (A) and a rosin-based resin (B).

FIG. 2 is a schematic view showing a cured product of an epoxy resin composition according to an embodiment of the present invention.

FIG. 3 is a schematic view showing measurement of peel strength.

DESCRIPTION OF EMBODIMENTS

<Epoxy Resin Composition>

The epoxy resin composition according to an embodiment of the present invention is characterized by comprising a main agent containing an epoxy resin (A), a rosin-based resin (B) and a modifier for the epoxy resin (C), and a curing agent (D). In this Description, the epoxy resin (A), rosin-based resin (B), modifier for the epoxy resin (C), and curing agent (D) will also respectively be referred to as the (A) component, (B) component, (C) component, and (D) component. Below, the component elements of the epoxy resin composition according to an embodiment of the present invention will be explained in more detail.

[Epoxy Resin (A)]

The epoxy resin (A) used in the epoxy resin composition according to an embodiment of the present invention may be any epoxy resin known in the field of art. Therefore, the epoxy resin (A), while not particularly limited to this, is preferably for example a bifunctional or more epoxy resin. The epoxy resin (A), for example, may be at least one selected from a bisphenol type epoxy resin, novolac type epoxy resin, alicyclic epoxy resin, aliphatic epoxy resin, glycidyl ester type epoxy resin, and glycidyl amine type epoxy resin. The epoxy resin (A) may be a single type used alone or may be two types or more used combined.

Specific examples of the bisphenol type epoxy resin include at least one selected from a bisphenol A-type epoxy resin, bisphenol F-type epoxy resin, bisphenol E-type epoxy resin, bisphenol S-type epoxy resin, bisphenol Z-type epoxy resin, and isophoron bisphenol type epoxy resin, and halides, alkyl substituents and hydrides thereof. The bisphenol type epoxy resin may be a monomer, may be a polymer having several repeating units, and further may be a glycidyl ether of an alkylene oxide adduct.

Specific examples of the novolac type epoxy resin include, for example, at least one selected from a phenol novolac type epoxy resin, cresol novolac type epoxy resin, and bisphenol A novolac type epoxy resin.

Specific examples of the alicyclic epoxy resin include, for example, at least one selected from 3,4-epoxy-6-methylcyclohexylmethyl-3,4-epoxy-6-methylcyclohexanecarboxylate, 3,4-epoxycyclohexylmethyl-3,4-epoxycyclohexanecarboxylate, and 1-epoxyethyl-3,4-epoxycyclohexane.

Specific examples of the aliphatic epoxy resin include, for example, at least one selected from trimethylolpropane polyglycidyl ether, pentaerythritol polyglycidyl ether, and polyoxyalkylene diglycidyl ether.

Specific examples of the glycidyl ester type epoxy resin include, for example, at least one selected from phthalic acid diglycidyl ester, tetrahydrophthalic acid diglycidyl ester and dimer acid diglycidyl ester.

Specific examples of the glycidyl amine type epoxy resin include, for example, at least one selected from tetraglycidyldiaminodiphenylmethane, tetraglycidyldiaminodiphenylsulfone, triglycidylaminophenol, triglycidylaminocresol, and tetraglycidylxylylenediamine.

[Rosin-Based Resin (B)]

The rosin-based resin (B) used in the epoxy resin composition according to an embodiment of the present invention indicates a natural resin obtained from pine trees and comprising a mixture of abietic acid having three ring structures, conjugated double bonds, and a carboxyl group and isomers of the same, and a derivative of the same. A "derivative of a rosin", for example, means an ester resin, etc., derived from a rosin. If whether the rosin-based resin (B) has the above structure or not cannot be specifically and clearly determined, for example, the rosin-based resin (B) can be defined as a resin where, when adjusting the blended amount with respect to 100 parts by mass of the epoxy resin (A), at any of the blended amounts, for example, a blended amount of 40 to 60 parts by mass, the peak value of the $\tan\delta$ (loss factor) is 0.03 or more in a temperature range of 0 to 30°C. A rosin-based resin (B) available as a commercial product includes, for example, Super Ester A-18 and A-100 and Ester Gum AT, etc., made by Arakawa Chemical Industries Co, Ltd., etc.

If the cured product of the epoxy resin composition contains the rosin-based resin (B), it is possible to obtain a high peak value of the $\tan\delta$ in particular in the relatively low temperature region of 0 to 30°C and therefore obtain a high vibration attenuation property in the relatively low temperature region of 0 to 30°C. Therefore, the content of the rosin-based resin (B) may be suitably determined considering the above effect of the rosin-based resin (B). While not particularly limited to this, for example, it may be 10 to 300 parts by mass with respect to 100 parts by mass of the epoxy resin (A) and is preferably 10 to 250 parts by mass, 10 to 220 parts by mass, 10 to 200 parts by mass, or 10 to 180 parts by mass. By adding the rosin-based resin (B) in 10 parts by mass or more with respect to 100 parts by mass of the epoxy resin (A), it is possible to reliably make the $\tan\delta$ rise, and therefore in this connection, it is possible to raise the vibration attenuation property more. From the viewpoint of raising the vibration attenuation property, the higher the content of the rosin-based resin (B), the more preferable. For example, it may also be 20 parts by mass or more, 30 parts by mass or more, 40 parts by mass or more, 50 parts by mass or more, 70 parts by mass or more, or 90 parts by mass or more with respect to 100 parts by mass of the epoxy resin (A). On the other hand, the upper limit is not particularly prescribed, but even if excessively including the rosin-based resin (B), the effect becomes saturated and a rise in cost is sometimes invited. Therefore, the content of the rosin-based resin (B) is preferably 250 parts by mass or less, 220 parts by mass or less, 200 parts by mass or less, or 180 parts by mass or less with respect to 100 parts by mass of the epoxy resin (A) and may also be 160 parts by mass or less, 140 parts by mass or less, 120 parts by mass or less, or 100 parts by mass or less.

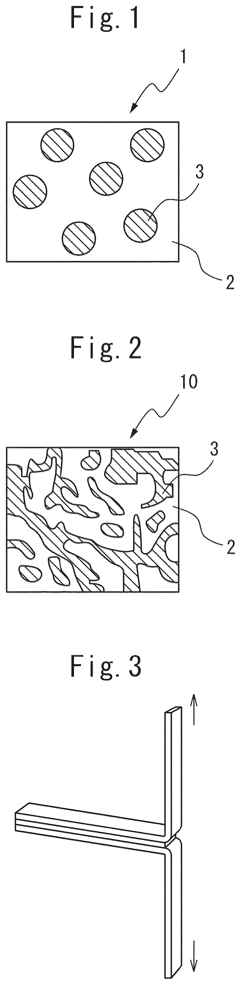

FIG. 1 is a schematic view showing a cured product of an epoxy resin composition containing the epoxy resin (A) and rosin-based resin (B). Referring to FIG. 1, it will be understood that the cured product 1 of the epoxy resin composition has a sea-island structure where the rosin-based resin 3 does not completely dissolve in the epoxy resin 2 and where the rosin-based resin 3 is present dispersed in the epoxy resin 2. In such a cured product, since the rosin-based resin (B) is present in a state separated from the epoxy resin (A) in phase, it is believed that the properties due to the rosin-based resin (B) can be manifested without being greatly affected by the epoxy resin (A). In actuality, from the results of experiments by the inventors, even in the cured product shown in FIG. 1, by adding the rosin-based resin (B), it is possible to obtain a high tan$\delta$ due to the rosin-based resin (B) in the relatively low temperature region of 0 to 30°C. Accordingly, it was confirmed that a high vibration attenuation property is exhibited even in such a relatively low temperature region. However, on the other hand, in a cured product of the epoxy resin composition containing only the epoxy resin (A) and rosin-based resin (B) as a main agent such as shown in FIG. 1, by adding the rosin-based resin (B), the ratio of the epoxy resin (A) excellent in adhesiveness relatively falls, and therefore the adhesiveness tends to fall.

[Modifier for Epoxy Resin (C)]

As opposed to this, in the epoxy resin composition according to an embodiment of the present invention, by joint use of a modifier for the epoxy resin (C) together with the rosin-based resin (B), it is possible to maintain the effect obtained by the rosin-based resin (B) in a high state while expanding the applicable temperature range of the vibration attenuation property and further raising the adhesiveness.

FIG. 2 is a schematic view showing a cured product of the epoxy resin composition according to an embodiment of the present invention. Referring to FIG. 2, it will be understood that, unlike the sea-island structure in the case of FIG. 1, the cured product 10 of the epoxy resin composition according to an embodiment of the present invention has the epoxy resin 2 and rosin-based resin 3 forming a complicated phase separated structure and the rosin-based resin 3 is present in the epoxy resin 2 in a state just barely joined together. It is believed that such a complicated phase separated structure is formed by addition of the modifier for the epoxy resin (C) and incorporation of this in the sea-island structure shown in FIG. 1. In this connection, if measuring the loss factor of the cured product of the epoxy resin composition according to an embodiment of the present invention, it is difficult to clearly separate the peak of the tan$\delta$ due to the epoxy resin (A), the peak of the tan$\delta$ due to the rosin-based resin (B), and the peak of the tan$\delta$ due to the modifier for the epoxy resin (C). A tendency for these peaks to become broader is observed. Such broadening of the tan$\delta$ peaks is believed to be due to the change from the sea-island structure shown in FIG. 1 to the complicated phase separated structure shown in FIG. 2. Further, along with the broadening of the tan$\delta$ peaks due to joint use of the rosin-based resin (B) and the modifier for the epoxy resin (C), a high loss factor can be achieved not only in the relatively low temperature region of 0 to 30°C, but also the relatively high temperature region of 30 to 60°C. For this reason, it is possible to expand the applicable temperature range of the vibration attenuation property. This time, it was discovered that while the reason is not necessarily clear, by adding the modifier for the epoxy resin (C), in addition to raising the vibration attenuation property such as explained above, the adhesiveness can also be raised or the vibration attenuation property and adhesiveness can be achieved with a good balance.

The modifier for the epoxy resin (C) used in the epoxy resin composition according to an embodiment of the present invention may be a modifier generally used for raising the impact resistance and toughness of an epoxy resin. Therefore, the modifier for the epoxy resin (C), while not particularly limited to this, for example, includes at least one selected from core-shell type rubber particles, carboxyl-terminated butadiene nitrile rubber (CTBN), a thermoplastic elastomer, and acryl-based block copolymer, etc., or is at least one selected therefrom, preferably includes at least one selected from core-shell type rubber particles and an acryl-based block copolymer or is at least one selected therefrom. While not intending to be bound by any specific theory, by adding the modifier for the epoxy resin (C), it is believed that cracks occurring in the epoxy resin due to peeling are prevented from advancing due to bridging of the modifier for the epoxy resin (C). It is believed that the adhesiveness is improved due to this. For example, the cured product of the epoxy resin composition according to an embodiment of the present invention can be used for forming vibration damping steel sheet by being applied as an adhesive layer at the interface of one steel sheet and another steel sheet. In this case, the adhesiveness of the epoxy resin is important, but due to the presence of the modifier for the epoxy resin (C) in the epoxy resin, even if cracks form in the epoxy resin due to peeling, the cracks can be prevented from advancing due to the above such bridging action. For this reason, the epoxy resin composition according to an embodiment of the present invention is extremely effective for use in applications such as vibration damping steel sheet.

Among the modifiers for the epoxy resin (C) as well, core-shell type rubber particles in particular are extremely high in effect of raising the adhesiveness. Further, they also can exhibit high results in expansion of the applicable temperature range of the vibration attenuation property. Further, an acryl-based block copolymer is particularly extremely high in effect of raising the vibration attenuation property and also exhibits a high effect in raising the adhesiveness as well. For this reason, a modifier for the epoxy resin (C) is preferably a material with hard portions and soft portions. If using core-shell type rubber particles and an acryl-based block copolymer, this is particularly preferable since it is possible to achieve a high vibration attenuation property and adhesiveness at an extremely high level.

The core-shell type rubber particles, while not particularly limited to this, for example, may be core-shell type multilayer structure polymer particles comprised of cores made of cross-linked rubber containing butadiene, acryl or silicone, etc., as a main component and shells made of an acryl-based copolymer, etc. The form when adding the core-shell type rubber particles to the epoxy resin composition may be the powder form, or the form of a master batch with the core-shell type rubber particles dispersed in the epoxy resin in advance. However, in the case of a powder, sometimes it is difficult to uniformly disperse it in an epoxy resin, and therefore addition in the form of a master batch is preferable. A material containing core-shell type rubber particles available as a commercial product includes, for example, Kane Ace MX-154 made by Kaneka, etc. For example, Kane Ace MX-154 includes a core-shell type rubber particle component in 40% and an epoxy resin component in 60%. Therefore, in the epoxy resin composition according to an embodiment of the present invention, when using the core-shell type rubber particles of Kane Ace MX-154, the content of the (C) component is 40% of the content of the Kane Ace MX-154. Similarly, the content of the (A) component is added to be 60% of the content of the Kane Ace MX-154. In the core-shell type rubber particles, the shell parts correspond to the hard portions and the core parts correspond to the soft portions.

The acryl-based block copolymer, while not particularly limited to this, for example, may be an acryl-based block copolymer having soft blocks and hard blocks produced using the living polymerization method. For example, the acryl-based block copolymer includes at least one selected from triblock copolymers having M-B-M structures and diblock copolymers having M-B structures. Here, "M" is a block comprised of a homopolymer of methyl methacrylate or a copolymer including at least 50 wt% of methyl methacrylate, while "B" is a block not soluble with respect to the epoxy resin and block M. Blocks shown by B and M are joined by direct bonds or through linking groups. Further, in the polymers of M, carboxylic acid groups or hydroxyl groups or other polar groups may be introduced. In an acryl-based block copolymer, the hard blocks correspond to the hard portions and the soft blocks correspond to the soft portions.

The acryl-based block copolymer includes, specifically, at least one selected from a polymethylmethacrylate/-polybutylacrylate/polymethylmethacrylate triblock copolymer, a polystyrene/polybutadiene/polymethylmethacrylate triblock copolymer, and polymethylmethacrylate/polybutylacrylate diblock copolymer, etc. By combining an acryl-based block copolymer selecting a polymer not soluble with an epoxy resin as a soft block (block B) and a polymer easily dissolving with an epoxy resin as a hard block (block M) with an epoxy resin (A), it is possible to make the acryl-based block copolymer suitably microdisperse in the epoxy resin (A). By making an acryl-based block copolymer having such a structure microdisperse in an epoxy resin (A), it is possible to suppress any drop in mechanical properties at the cured product of the epoxy resin composition while raising the tanδ. In particular, if a carboxylic acid group or hydroxyl group or other polar group is introduced into polymethylmethacrylate, the adhesiveness is improved, and therefore this is more preferable. An acryl-based block copolymer available as a commercial product includes, for example, Nanostrength D51N or M52N made by Arkema, etc.

The content of the modifier for the epoxy resin (C) may be suitably determined considering the above effect of the modifier for the epoxy resin (C). While not particularly limited to this, for example, it may be 1 to 200 parts by mass with respect to 100 parts by mass of the epoxy resin (A). It is preferably made 1 to 150 parts by mass, 1 to 120 parts by mass, 10 to 100 parts by mass, or 1 to 90 parts by mass. By adding the modifier for the epoxy resin (C) in 1 part by mass or more with respect to 100 parts by mass of the epoxy resin (A), it is possible to sufficiently obtain the effect of expansion of the applicable temperature range of the vibration attenuation property due to the formation of the complicated phase separated structure such as shown in FIG. 2 and the effect of raising the adhesiveness. From the viewpoint of making these effects more remarkable, the higher the content of the modifier for the epoxy resin (C), the more preferable. For example, the content may be 3 parts by mass or more, 5 parts by mass or more, 7 parts by mass or more, 9 parts by mass or more, 10 parts by mass or more, or 20 parts by mass or more with respect to 100 parts by mass of the epoxy resin (A). On the other hand, the upper limit is not particularly prescribed. However, even if excessively including this modifier for the epoxy resin (C), the effect becomes saturated and sometimes a rise in cost is invited. Therefore, the content of the modifier for the epoxy resin (C) is preferably 150 parts by mass or less, 120 parts by mass or less, 100 parts by mass or less, or 90 parts by mass or less, with respect to 100 parts by mass of the epoxy resin (A) and may also be 70 parts by mass or less, 50 parts by mass or less, 30 parts by mass or less, 25 parts by mass or less, 20 parts by mass or less, 18 parts by mass or less, 16 parts by mass or less, 14 parts by mass or less, or 12 parts by mass or less. The above-mentioned Kane Ace MX-154 and other Kane Ace MX products are liquid master batches containing curable epoxy resins, etc., in which core-shell type rubber particles are dispersed in a high concentration as single particles. The "content of the modifier for the epoxy resin (C)" as referred to in the present invention is obtained by calculating the content in the part other than the epoxy resin. On the other hand, the part of the epoxy resin is calculated added to the parts by mass of the epoxy resin (A). Further, while not particularly limited to this, the content of the modifier for the epoxy resin (C) is preferably the content of the rosin-based resin (B) or less, more preferably is smaller than the content of rosin-based resin (B).

In particular, if the modifier for the epoxy resin (C) is core-shell type rubber particles, the rosin-based resin (B) is preferably 90 to 250 parts by mass with respect to 100 parts by mass of the epoxy resin (A), while the modifier for the epoxy resin (C), i.e., the core-shell type rubber particles, is preferably 20 to 50 parts by mass. In this case, the rosin-based resin (B) may also be 120 parts by mass or more and/or may be 200 parts by mass or less with respect to 100 parts by mass of the epoxy resin (A). Similarly, the modifier for the epoxy resin (C) may also be 40 parts by mass or less with respect to 100 parts by mass of the epoxy resin (A).

On the other hand, if the modifier for the epoxy resin (C) is an acryl-based block copolymer, the rosin-based resin (B) is preferably 40 to 180 parts by mass, while the modifier for the epoxy resin (C), i.e., an acryl-based block copolymer, is preferably 10 to 120 parts by mass, more preferably 10 to 100 parts by mass, with respect to 100 parts by mass of the epoxy resin (A).

While not particularly limited to this, as explained above, the content of the modifier for the epoxy resin (C) is preferably the content of the rosin-based resin (B) or less. Being less than the content of the rosin-based resin (B) is more preferable. In this connection, in a specific embodiment of the present invention, the contents of the epoxy resin (A), rosin-based resin (B), and modifier for the epoxy resin (C) may satisfy a relation where a parameter K represented by the following formula is 0 to 0.74. Due to this, it is possible to further improve the loss factor at both of the relatively low temperature region of 0 to 30°C and the relatively high temperature region of 30 to 60°C.

$$K=[B]/([A]+[B]+[C])-[C]/([A]+[B]+[C])$$

where, [A] is the content of the epoxy resin (A) in units of parts by mass and is 100, [B] is the ratio of content of the rosin-based resin (B) in units of parts by mass with respect to 100 parts by mass of the epoxy resin (A), and [C] is the ratio of content of the modifier for the epoxy resin (C) in units of parts by mass with respect to 100 parts by mass of the epoxy resin (A). K may be 0.10 or more, 0.20 or more, or 0.30 or more. Similarly, K may be 0.70 or less, 0.60 or less, or 0.50 or less.

[Curing Agent (D)]

In the epoxy resin composition according to an embodiment of the present invention, by adding a curing agent (D) to the main agent including an epoxy resin (A), rosin-based resin (B), and modifier for the epoxy resin (C) explained above, in the cured product obtained after reaction of the main agent and the curing agent (D), it is possible to form a complicated phase separated structure such as shown in FIG. 2. As shown in FIG. 1 and explained above in relation to the same, such a complicated phase separated structure cannot be formed by just adding the rosin-based resin (B) to the epoxy resin (A) and can first be formed by jointly using with the epoxy resin (A) the rosin-based resin (B) and modifier for the epoxy resin (C). That is, in the epoxy resin composition according to an embodiment of the present invention, the main agent including the specific combination of the epoxy resin (A), rosin-based resin (B) and modifier for the epoxy resin (C) are important. Due to this, the object of the present invention of providing an epoxy resin composition able to improve both the vibration attenuation property and adhesiveness is achieved. Therefore, the curing agent (D) used in the epoxy resin composition is not particularly limited and may be any curing agent known to persons skilled in the art. Further, the curing agent (D) may be a solid or a liquid at ordinary temperature. For example, the curing agent (D) may include at least one selected from amines, polyhydric phenols, and acid anhydrides or may be at least one selected therefrom, preferably includes an amine, i.e., amine-based curing agent, or is an amine-based curing agent.

Specific examples of the amine-based curing agent include, for example, at least one selected from dicyandiamide, diaminodiphenylsulfone, diaminodiphenylmethane, methaphenylenediamine, diethylenetriamine, triethylenetetramine, tetraethylenepentamine, m-xylenediamine, trimethylhexamethylenediamine, 2-methylpentamethylenediamine, diethylaminopropylamine, isophoronediamine, 1,3-bisaminomethylcyclohexane, bis(4-aminocyclohexyl)methane, norobornene diamine, 1,2-diaminocyclohexane, Laromin C-260, polyoxypropylene diamine D-230, polyoxypropylene triamine T-403, polycyclohexyl polyamine mixture, and N-aminoethylpiperadine, etc. Among these as well, by using dicyandiamide, the epoxy resin composition will not change in performance due to moisture in the air, the quality of the epoxy resin composition can be maintained stably over a long period of time, and curing can be completed at a relatively low temperature, and therefore this is preferable. Here, the "relatively low temperature" means 100 to 130°C or so.

Specific examples of the polyhydric phenols include, for example, bisphenol A, bisphenol F (mixture of isomers), 4,4'-dihydroxydiphenylmethane, 4,4'-dihydroxydiphenyl ether, 4,4'-dihydroxybenzophenone, 4,4'-dihydroxydiphenyl sulfide, 4,4'-dihydroxydiphenyl sulfone, fluorenebisphenol, 4,4'-dihydroxybiphenyl, 2,2'-dihydroxybiphenyl, hydroquinone, resorcin, 1,5-naphthalenediol, 1,6-naphthalenediol, 2,6-naphthalenediol, 2,7-naphthalenediol, and other dihydric phenols or tris(hydroxyphenyl)methane mixtures, tris-(4-hydroxyphenyl)methane, 1,1,2,2-tetrakis(4-hydroxyphenyl)ethane, phenol novolac, o-cresol novolac, naphthol novolac, polyvinylphenol, and other such trihydric or more phenols, etc.

Specific examples of acid anhydrides include phthalic anhydride, tetrahydrophthalic anhydride, methyltetrahydrophthalic anhydride, hexahydrophthalic anhydride, methylhexahydrophthalic anhydride, methyl hymic anhydride, nadic anhydride, trimellitic anhydride, etc.

The content of the curing agent (D) differs depending on the type and may be suitably selected in accordance with the type of curing agent used. For example, if the curing agent (D) is an amine-based curing agent, in particular dicyanamide, the content is usually 1 to 25 parts by mass with respect to 100 parts by mass of the epoxy resin (A). For example, the content of the curing agent (D) may be 2 parts by mass or more, 3 parts by mass or more, or 5 parts by mass or more with respect to 100 parts by mass of the epoxy resin (A). Similarly, the content of the curing agent (D) may be 20 parts by mass or less, 15 parts by mass or less, or 10 parts by mass or less with respect to 100 parts by mass of the epoxy resin (A). Preferably, it is an amount giving a number of moles of the active hydrogen of the amine-based curing agent, in particular dicyaniamide, of 0.5 to 1.0 time the total number of moles of the epoxy groups of the epoxy resin (A) contained in the epoxy resin composition. By making the number of moles of the active hydrogen 0.5 time or more, a cured product with excellent heat resistance and with excellent mechanical properties (i.e., high strength) is obtained. Further, by making it 1.0 time or less, a cured product with excellent mechanical properties is obtained. The total number of moles of the epoxy groups of the epoxy resin (A) contained in the epoxy resin composition may be calculated from the amount of charging the epoxy resin.

[Curing Accelerator (E)]

The epoxy resin composition according to an embodiment of the present invention may optionally contain a curing accelerator (E). The curing accelerator (E) includes at least one selected from a urea compound, tertiary amine and its salts, imidazole and its salts, and Lewis acid and Brønsted acid and their salts, etc. Among these as well, from the balance of the storage stability and curing accelerating ability, a urea compound is preferably used. A urea compound includes, for example, at least one selected from N,N-dimethyl-N'-(3,4-dichlorophenyl)urea, toluenebis(dimethylurea), 4,4'-methylenebis(phenyldimethylurea), and 3-phenyl-1,1-dimethylurea. Commercially available products of urea compounds include DCMU99 (made by Hodogaya Chemical Co., Ltd.), Omicure24, Omicure52, Omicure94 (above made by Emerald performance, LLC), etc.

The content of the curing accelerator (E), while not particularly limited to this, for example is preferably 1 to 7 parts by mass, more preferably 3 to 5 parts by mass, with respect to 100 parts by mass of the epoxy resin (A). By using the curing accelerator (E) in such a range, it is possible to sufficiently promote the reaction to better raise the modulus of elasticity and heat resistance of the cured product.

[Additive (F)]

The epoxy resin composition according to an embodiment of the present invention may optionally contain an additive (F) containing at least one selected from a thermoplastic resin, thermoplastic elastomer, elastomer, defoamer, and leveling agent, etc.

If containing, for example, a thermoplastic resin, thermoplastic elastomer, or elastomer as the additive (F), this not only acts to change the viscoelasticity of the epoxy resin composition according to an embodiment of the present invention to render the viscosity, storage modulus, and thixotropicity more suitable, but also raises the fracture toughness of the cured product of the epoxy resin composition. The thermoplastic resin, thermoplastic elastomer, and elastomer may be used alone or two or more types may be jointly used. These additives can be blended in by an amount of 1 to 15 parts by mass, preferably 1 to 10 parts by mass, with respect to 100 parts by mass of the epoxy resin composition. The thermoplastic resin, etc., may be dissolved in the epoxy resin or may be contained in the epoxy resin composition in the form of particulate, filaments, staple fibers, woven fabric, nonwoven fabric, mesh, pulp, etc.

A thermoplastic resin preferably has at the main chain at least one bond selected from the group consisting of a carbon-carbon bond, amide bond, imide bond, ester bond, ether bond, carbonate bond, urethane bond, urea bond, thioether bond, sulfone bond, imidazole bond, and carbonyl bond. More specifically, a thermoplastic resin includes, for example, polyacrylate, polyamide, polyaramide, polyester, polycarbonate, polyphenylene sulfide, polybenzimidazole, polyimide, polyetherimide, polysulfone, polyester sulfone, and other such thermoplastic resin falling under the category of engineering plastics. Among these as well, due to their excellent heat resistance, polyimide, polyetherimide, polysulfone, and polyester sulfone, etc., are particularly preferably used. Further, the fact that these thermoplastic resins have functional groups reactive with an epoxy resin is preferable from the viewpoint of raising the fracture toughness and maintaining the environmental resistance of the cured product of the epoxy resin composition according to an embodiment of the present invention. Preferable functional groups having reactivity with an epoxy resin include a carboxyl group, amino group, and hydroxy group, etc.

As the additive (F), a defoamer or a leveling agent can be added for the purpose of raising the surface flatness. These additives can be blended in by 0.01 to 3 parts by mass, preferably 0.01 to 1 parts by mass, with respect to 100 parts by mass of the epoxy resin composition as a whole. By controlling the blended amount to within such a range, it is possible to sufficiently obtain the effect of flattening the surface. Further, it is also possible to blend in a pigment or other additive in accordance with need.

The epoxy resin composition according to an embodiment of the present invention preferably has blended amounts of the (A) to (D) components of 50 mass% or more, preferably 80 mass% or more, of the epoxy resin composition as a whole so as to maintain a liquid state overall. Note that a solvent is not treated as an additive.

<Method of Production of Epoxy Resin Composition>

The method of production of the epoxy resin composition according to an embodiment of the present invention is not particularly limited. Therefore, the epoxy resin composition may be produced by any suitable method known to persons skilled in the art. For example, all of the components forming the epoxy resin composition may be simultaneously mixed together. Such a method is efficient if all of the epoxy resin (A), rosin-based resin (B), modifier for the epoxy resin (C), and curing agent (D) are liquids. On the other hand, for example, if the modifier for the epoxy resin (C), curing agent (D), etc., are powder in form, the modifier for the epoxy resin (C) and/or the curing agent (D) may be mixed in advance with a part of the epoxy resin (A) to be included in the composition, more specifically, these components may be made to uniformly disperse in a part of the epoxy resin (A) to prepare a master batch and this used to prepare an epoxy resin composition. The mixing operation can be performed using a triple roll mill, planetary mixer, kneader, universal stirrer, homogenizer, homodisperser, or other mixing machine. For example, the epoxy resin composition can be produced by a method of production including following steps 1 to 3:

step 1: mixing a curing agent (D) with a part of an epoxy resin (A) to prepare a resin composition,
step 2: charging the epoxy resin (A), a rosin-based resin (B) and a modifier for the epoxy resin (C) into a melting container and heating and mixing them at 140 to 170°C for 1 to 6 hours to obtain a master batch based on the melted (B) and (C) components, and
step 3: cooling the master batch obtained at step 2 to 50 to 70°C, then adding the resin composition obtained at step 1 and mixing them at 50 to 70°C for 0.5 to 2 hours to obtain an epoxy resin composition.

The components may be suitably blended in by ratios as explained in relation to the epoxy resin composition. For example, in the finally obtained epoxy resin composition, the components may be suitably blended in at steps 1 and 2 so that the rosin-based resin (B) becomes 10 to 300 parts by mass, preferably 10 to 180 parts by mass or 40 to 180 parts by mass and so that the modifier for the epoxy resin (C) becomes 1 to 200 parts by mass, preferably 1 to 90 parts by mass or 10 to 50 parts by mass in content with respect to 100 parts by mass of the epoxy resin (A). For the curing agent (D) as well, similarly, it may be suitably blended in so that, for example, it becomes 1 to 25 parts by mass with respect to 100 parts by mass of the epoxy resin (A).

If adding to the epoxy resin composition according to an embodiment of the present invention a curing accelerator (E), additive (F), etc., these components may be added at either of the above steps 1 and 2. In this case, the curing accelerator (E) may, for example, be blended in to give 1 to 7 parts by mass with respect to 100 parts by mass of the epoxy resin (A). The additive (F) may, for example, be blended in to give 1 to 15 parts by mass with respect to 100 parts by mass of the epoxy resin composition as a whole.

It is possible to dissolve and coat the epoxy resin composition according to an embodiment of the present invention on release paper, etc., to obtain a film of an epoxy resin composition. The film is useful for use as a protective surface film or adhesive film by attaching it to a base material. Further, as the method of use, the epoxy resin composition according to an embodiment of the present invention is preferably coated on the surface of release paper or other base material. The obtained coated layer may be attached to a separate base material uncured and then cured or the coated layer itself may be cured and used as a film.

Further, the components of the epoxy resin composition of the present embodiment are identified and their amounts of formulation determined by suitably diluting the epoxy resin composition by a solvent, separating the components utilizing the differences in solubility and then analyzing the separated components by various methods of analysis. More specifically, the epoxy resin (A) is in principle analyzed by pyrolysis-gas chromatograph/mass spectrometry (pyrolysis-gas GC/MS) and more simply can be analyzed by confirming the presence of OH groups by infrared spectroscopy (IR) analysis. The rosin-based resin (B) is analyzed by field desorption mass spectrometry (FD/MS). The modifier for the epoxy resin (C) is analyzed by nuclear magnetic resonance (NMR). The other components, for example, the curing agent (D), curing accelerator (E), additive (F), etc., can be analyzed by any suitable analysis methods known to persons skilled in the art. The results obtained by the above analysis methods can be suitably utilized for confirming the makeup of compositions with known blended amounts or identifying the makeup of compositions with unknown blended amount when determining the parameters applied in the embodiments.

Below, examples will be used to explain the present invention in more detail, but the present invention is not limited to these examples in any way.

EXAMPLES

In the following examples, epoxy resin compositions were produced by various combinations of the component elements and the obtained epoxy resin compositions were investigated for the loss factor (vibration attenuation property) and peel strength (adhesiveness).

The starting materials used in the examples were as follows:

[Starting Materials]

[Epoxy Resin (A)]

· Bisphenol A-type 2-functional epoxy resin (product name: YD-128, made by Nippon Steel Chemical & Material Co., Ltd., viscosity (25°C) 13000 mPa·s, ordinary temperature liquid)
· Bisphenol A-type 2-functional epoxy resin (product name: YD-127, made by Nippon Steel Chemical & Material Co., Ltd., viscosity (25°C) 9000 mPa·s, ordinary temperature liquid) [Rosin-Based Resin (B)]
· Rosin ester (product name: Super Ester A-18, made by Arakawa Chemical Industries Col, Ltd.)
· Rosin ester (product name: Super Ester A-100, made by Arakawa Chemical Industries Col, Ltd.)
· Rosin ester (product name: Ester Gum AT, made by Arakawa Chemical Industries Col, Ltd.)

[Modifier for Epoxy Resin (C)]

· Core-shell type rubber (product name: Kane Ace MX-154, made by Kaneka Corporation)
· Acryl-based block copolymer (poly(methylmethacrylate)/poly(butylacrylate) diblock copolymer) (product name: Nanostrength D51N, made by Arkema)
· Acryl-based block copolymer (poly(methylmethacrylate)/poly(butylacrylate)/ (poly(methylmethacrylate) triblock copolymer with further dimethylacrylamide copolymerized) (product name: Nanostrength M52N, made by Arkema)

[Curing Agent (D)]

· Dicyaniamide (product name: DICY15, made by Mitsubishi Chemical Co., Ltd.)

[Curing Accelerator (E)]

3-(3,4-dichlorophenyl)-1,1-dimethylurea (product name: DCMU99, made by Hodogaya Chemical Co., Ltd.)

[Production of Epoxy Resin Composition]

First, in each of the formulations of the epoxy resin compositions of the examples and comparative examples shown in Tables 1 to 3, a part of the (A) component is taken out, then the (D) component and (E) component are made to uniformly disperse in the taken out part of the (A) component by a three-roll mill to prepare a resin composition 1. Next, from the components of each of the examples and comparative examples, all of components other than the portion used for preparing the resin composition 1 are measured out into a glass flask and heated and mixed at 150°C for 3 hours to thereby obtain a uniform master batch. Next, the obtained master batch is cooled to 60°C or less, then the resin composition 1 is measured out and added, heated, and mixed at 60 to 70°C for 1 hour to make it uniformly disperse to obtain an epoxy resin composition. The formulation of the obtained epoxy resin composition is as shown in Tables 1 to 3. In Tables 1 to 3, the contents of the other components are respectively shown with respect to the component (A) as 100 parts by mass. Further, Kane Ace MX-154 includes core-shell type rubber particles component in 40% and an epoxy resin component in 60%, and therefore in an epoxy resin composition containing Kane Ace MX-154, the content of each of the (C) component for Kane Ace MX-154 in Tables 1 to 3 shows the value of 40% of the amount of addition of Kane Ace MX-154 itself. Similarly, the content of the (A) component shows the value of 60% of the amount of addition of Kane Ace MX-154 itself as the value added.

[Production of Sandwiched Steel Sheets]

First, in each of the examples and comparative examples, the obtained epoxy resin composition was coated on a sheet thickness 0.4 mm steel sheet using an applicator so as to give a certain thickness of 400 μm. This was mated with another steel sheet (sheet thickness 0.4 mm) together with Teflon spacers, then pressed and held by a hot press at a temperature of 150°C for 2 hours to obtain sandwiched steel sheets with a cured product of the epoxy resin composition inserted at the interface. Next, the obtained sandwiched steel sheets were adjusted to a length 40 mm×width 10 mm size to obtain a test piece for measurement of the loss factor (tan δ). Further, sandwiched steel sheets were produced and adjusted by a similar method so that in the length 70 mm×width 15 mm, a nonadhered portion became 30 mm in the length direction. Further, as shown in FIG. 3, the steel sheets at the nonadhered portion were spread out in a T-shape to obtain a T-shaped peeling test piece for measurement of the peel strength.

[Measurement of Loss Factor (tan δ)]

The test piece for measurement of the loss factor (tan δ) obtained above was measured for dynamic mechanical analysis (DMA) to measure the loss factor (tan δ) of each of the examples and comparative examples. For the apparatus, DMA7100 made by Hitachi High Tech Science Corporation was used. The temperature was raised in two cycles of raising the temperature from -100°C to 200°C by 2°C/min, then lowering the temperature from 200°C to -100°C and again raising the temperature from -100°C to 200°C by 2°C/min. The measurement frequency was set to 10Hz and the measurement was conducted in the bending mode. Note that the data of the loss factor (tan δ) (peak values from 0 to 30°C and 30 to 60°C) was the data of the process of temperature elevation in the second cycle. "DMA" is the method of measuring the dynamic properties of a sample by applying, to a sample, strain or stress (vibration) changing according to the time and measuring the stress or strain occurring as a result. Using DMA, viscoelastic properties of a sample such as the storage modulus, loss modulus, loss factor and other temperature-dependency or frequency dependency can be measured. Among these as well, the loss factor is generally used as an indicator of the vibration attenuation property.

[Measurement of Peel Strength (T-Type Peel Test)]

An Autograph AGS-H made by Shimadzu Corporation was used to perform a tensile test on the T-type peeling test piece obtained above by a gauge length set to 30 mm, a 500N load cell, and a head speed of 100 mm/min to thereby measure the peel strength of the resin at the steel sheet/steel sheet interface.

[Evaluation of Peel Strength]

The peel strength was evaluated as follows: Cases where the peel strength was improved in a comparison with an example where the ratio of the (B) component was the same and where the (C) component was not added were evaluated as passing (good), while cases where the peel strength fell were evaluated as failing (poor). For examples where the (B) component was added, but the (C) component was not added or examples where the (B) component was not added, but the (C) component was added, cases where the peel strength was improved compared with an example where both of the (B) and (C) components were not added were evaluated as passing (good), while cases where the peel strength fell were evaluated as failing (poor). The specific cases of comparison of the peel strength are as shown in Tables 1 to 3.
Cases where the peak value of the tan δ was 0.0300 or more in both 0 to 30°C and 30 to 60°C and the peel strength was evaluated as passing (good) were evaluated as epoxy resin compositions where both of the vibration attenuation property and adhesiveness can be improved. The results are shown in Tables 1 to 3.

[Table 1]

Table 1

| | | Comp. Ex. 1 | Comp. Ex. 2 | Comp. Ex. 3 | Comp. Ex. 4 | Comp. Ex. 5 | Comp. Ex. 6 | Comp. Ex. 7 | Ex. 1 | Ex. 2 | Ex. 3 | Ex. 4 | Comp. Ex. 8 | Comp. Ex. 17 |
|---|---|---|---|---|---|---|---|---|---|---|---|---|---|---|
| Epoxy resin (A) | YD-128 | 100 | 100 | 100 | 100 | 100 | 100 | | 100 | 100 | 100 | 100 | 100 | 100 |
| | YD-127 | | | | | | | 100 | | | | | | |
| Rosin-based resin (B) | Super Ester A-18 | | 30 | 40 | 50 | 70 | 90 | 90 | 90 | 90 | 90 | 90 | | |
| | Ester Gum AT | | | | | | | | | | | | | |
| | Super Ester A-100 | | | | | | | | | | | | | |
| Modifier for epoxy resin (C) | Kane Ace MX-154 (note 1) | | | | | | | | 10.2 | 15.4 | 19.7 | 23.4 | 3.8 | 10.2 |
| | D51N M52N | | | | | | | | | | | | | |
| Curing agent (D) | DICY15 | 5.6 | 5.6 | 5.6 | 5.6 | 5.6 | 5.6 | 5.7 | 5.7 | 5.7 | 5.7 | 5.7 | 5.7 | 5.7 |
| Curing Accelerator (E) | DCMU99 | 3.17 | 3.17 | 3.17 | 3.17 | 3.17 | 3.17 | 3.17 | 3.17 | 3.17 | 3.17 | 3.17 | 3.17 | 3.17 |
| [B]/([A]+[B]+[C] | )-[C]/([A]+[B]+[C]) | 0.00 | 0.23 | 0.29 | 0.33 | 0.41 | 0.47 | 0.47 | 0.40 | 0.36 | 0.34 | 0.31 | -0.04 | -0.09 |
| Evaluation of properties | $\tan\delta$ (0 to 30°C peak value) | 0.0083 | 0.0068 | 0.0130 | 0.0345 | 0.0776 | 0.1240 | 0.1448 | 0.1505 | 0.1267 | 0.1194 | 0.1094 | 0.0083 | 0.0073 |
| | $\tan\delta$ (30 to 60°C peak value) | 0.0093 | 0.0090 | 0.0132 | 0.0107 | 0.0208 | 0.0196 | 0.0234 | 0.0759 | 0.0723 | 0.0702 | 0.0710 | 0.0085 | 0.0058 |
| | Peeling strength (N) | 45.7 | 69.4 | 52.9 | 17.3 | 7.2 | 7.1 | 13 | 8.6 | 14.9 | 27.7 | 37.8 | 56.4 | 50.8 |
| | Judgment of quality of peel strength | - | Good | Good | Poor | Poor | Poor | Poor | Good | Good | Good | Good | Good | Good |
| | Object of comparison of peel strength | - | Comp. Ex. 1 | | | | | Comp. Ex. 9 | Comp. Ex. 6 | | | | Comp. Ex. 1 | Comp. Ex. 1 |

(Note 1): The displayed value of the (C) component shows the value of the amount of addition of Kane Ace MX-154 itself x 0.4. The displayed value of the (A) component shows the value of the amount of addition of Kane Ace MX-154 itself x 0.6.

EP 4 685 186 A1

[Table 2]

[Table 2]

Table 2

| | | Comp. Ex. 9 | Comp. Ex. 10 | Ex. 5 | Comp. Ex. 11 | Ex. 6 | Ex. 16 | Ex. 17 | Comp. Ex. 12 | Comp. Ex. 13 | Comp. Ex. 14 |
|---|---|---|---|---|---|---|---|---|---|---|---|
| Epoxy resin (A) | YD-128 | | | | | | | | | | |
| | YD-127 | 100 | 100 | 100 | 100 | 100 | 100 | 100 | 100 | 100 | 100 |
| Rosin-based resin (B) | Super Ester A-18 | | | 90 | | 90 | 90 | 90 | | | |
| | Ester Gum AT | | | | | | | | | | |
| | Super Ester A-100 | | | | | | | | | | |
| Modifier for epoxy resin (C) | Kane Ace MX-154 (note 1) | | | | | | | | | | |
| | D51N | | 10 | 10 | | | | 90 | 100 | 20 | 30 | 40 |
| | M52N | | | | 10 | 10 | | | | | | |
| Curing agent (D) | DICY15 | 5.7 | 5.7 | 5.7 | 5.7 | 5.7 | 5.7 | 5.8 | 5.7 | 5.7 | 5.7 |
| Curing accelerator (E) | DCMU99 | 3.17 | 3.17 | 3.17 | 3.17 | 3.17 | 3.17 | 3.18 | 3.17 | 3.17 | 3.17 |
| [B]/([A]+[B]+[C])-[C]/([A]+[B]+[C]) | | 0.00 | -0.09 | 0.40 | -0.09 | 0.40 | 0.00 | -0.03 | -0.17 | -0.23 | -0.29 |
| Evaluation of properties | $\tan\delta$ (0 to 30°C peak value) | 0.0077 | 0.0097 | 0.4694 | 0.0113 | 0.2948 | 0.2641 | 0.2517 | 0.0266 | 0.0189 | 0.0246 |
| | $\tan\delta$ (30 to 60°C peak value) | 0.0072 | 0.0092 | 0.5311 | 0.0105 | 0.2702 | 0.2300 | 0.2018 | 0.0349 | 0.0268 | 0.0501 |
| | Peeling strength (N) | 44.6 | 54.6 | 15.4 | 54.4 | 14.4 | 58.4 | 46.0 | 4.5 | 1.3 | 7.4 |
| | Judgment of quality of peel strength | - | Good | Good | Good | Good | Good | Good | Poor | Poor | Poor |
| | Object of comparison of peel strength | - | Comp. Ex. 9 | Comp. Ex. 7 | Comp. Ex. 9 | Comp. Ex. 7 | Comp. Ex. 7 | Comp. Ex. 7 | Comp. Ex. 9 | | |

(Note 1): The displayed value of the (C) component shows the value of the amount of addition of Kane Ace MX-154 itself x 0.4. The displayed value of the (A) component shows the value of the amount of addition of Kane Ace MX-154 itself x 0.6.

[Table 3]

[Table 3]

Table 3

| | | Ex. 7 | Ex. 8 | Ex. 9 | Ex. 10 | Comp. Ex. 15 | Comp. Ex. 16 | Ex. 11 | Ex. 12 | Ex. 13 | Ex. 14 | Ex. 15 | Ex. 18 | Ex. 19 |
|---|---|---|---|---|---|---|---|---|---|---|---|---|---|---|
| Epoxy resin (A) | YD-128 | | | | | | | | | | | | | |
| | YD-127 | 100 | 100 | 100 | 100 | 100 | 100 | 100 | 100 | 100 | 100 | 100 | 100 | 100 |
| Rosin-based resin (B) | Super Ester A-18 | 90 | 90 | 90 | 90 | | | | 120 | 140 | 160 | 180 | 180 | 200 |
| | Ester Gum AT | | | | | | 90 | 90 | | | | | | |
| | Super Ester A-100 | | | | | 30 | | | | | | | | |
| Modifier for epoxy resin (C) | Kane Ace MX-154 (note 1) | 10.2 | 15.4 | 19.7 | 23.4 | | | | 23.4 | 23.4 | 23.4 | 23.4 | | 23.4 |
| | D51N M52N | 8.5 | 7.7 | 7.0 | 6.5 | | | 10 | | | | | 10 | |
| Curing agent (D) | DICY15 | 5.7 | 5.7 | 5.7 | 5.7 | 5.7 | 5.7 | 5.7 | 5.7 | 5.7 | 5.7 | 5.7 | 5.7 | 5.7 |
| Curing accelerator (E) | DCMU99 | 3.17 | 3.17 | 3.17 | 3.17 | 3.17 | 3.17 | 3.17 | 3.17 | 3.17 | 3.17 | 3.17 | 3.17 | 3.18 |
| [B]/([A]+[B]+[C])-[C]/([A]+[B]+[C]) | | 0.34 | 0.31 | 0.29 | 0.27 | 0.23 | 0.47 | 0.40 | 0.40 | 0.44 | 0.48 | 0.52 | 0.59 | 0.55 |

EP 4 685 186 A1

(continued)

| | | Ex. 7 | Ex. 8 | Ex. 9 | Ex. 10 | Comp. Ex. 15 | Comp. Ex. 16 | Ex. 11 | Ex. 12 | Ex. 13 | Ex. 14 | Ex. 15 | Ex. 18 | Ex. 19 |
|---|---|---|---|---|---|---|---|---|---|---|---|---|---|---|
| Evaluation of proper-ties | tanδ (0 to 30°C peak value) | 0.1583 | 0.1304 | 0.1277 | 0.1115 | 0.0082 | 0.1096 | 0.2818 | 0.2039 | 0.2595 | 0.3163 | 0.3727 | 0.4182 | 0.3731 |
| | tanδ (30 to 60°C peak value) | 0.0575 | 0.0542 | 0.0609 | 0.0559 | 0.0094 | 0.0211 | 0.1056 | 0.1179 | 0.1288 | 0.1430 | 0.1374 | 0.5776 | 0.1212 |
| | Peeling strength (N) | 13.9 | 14.1 | 22.4 | 25.9 | 68.5 | 10.7 | 13.5 | 26.3 | 29 | 23.8 | 14.6 | 8.6 | 12.4 |
| | Judgment of quality of peel strength | Good | Good | Good | Good | Good | Poor | Good | Good | Good | Good | Good | Good | Good |
| | Object of comparison of peel strength | Comp. Ex. 7 | | | | Comp. Ex. 9 | | Comp. Ex. 16 | Test pieces with no (C) component peeled apart and could not be produced | | | | | | |

(Note 1): The displayed value of the (C) component shows the value of the amount of addition of Kane Ace MX-154 itself x 0.4. The displayed value of the (A) component shows the value of the amount of addition of Kane Ace MX-154 itself x 0.6.

17

Referring to Tables 1 to 3, in Comparative Example 1 including only the (A) component among the (A) to (C) components and each of Comparative Examples 2 to 7 including only the (A) and (B) components, the amount of addition of the (B) component was increased from 50 to 90 parts by mass with respect to 100 parts by mass of the (A) component. In each, a high peak value of the tanδ was exhibited in the 0 to 30°C relatively low temperature region and therefore the tendency was observed that while a high vibration attenuation property was exhibited, this was accompanied by a drop in the adhesiveness. Such a drop in adhesiveness is believed due to the increase in the amount of addition of the (B) component and thereby the relative drop in the ratio of the (A) component excellent in adhesiveness. Further, in each of Comparative Examples 1 to 7, the peak value of the tanδ in the 30 to 60°C relatively high temperature region was low and therefore a sufficient vibration attenuation property could not be obtained in such a relatively high temperature region.

On the other hand, in each of Examples 1 to 4 in which the amount of addition of the (B) component was the same as Comparative Examples 6 and 7 exhibiting a high vibration attenuation property in a low temperature region (90 parts by mass) and the (C) component was added, a high peak value of the tanδ was exhibited even in the 30 to 60°C relatively high temperature region and therefore the applicable temperature range of the vibration attenuation property could be expanded. Further, in each of Comparative Examples 8 and 17 in which only the (C) component was added, a high peak value of the tanδ was not exhibited in the temperature region of 30 to 60°C, and therefore the rise in the vibration attenuation property in such a high temperature region was deemed not an effect due to simply the addition of the (C) component, but an effect obtained by a combination of the (B) component and the (C) component. More specifically, it is believed that due to the combination of the (B) component and the (C) component, the tanδ peak became broader due to the change to a complicated phase separated structure such as shown in FIG. 2 and along with this, a high loss factor could be achieved not only in the temperature region of 0 to 30°C, but also the temperature region of 30 to 60°C. Further, in each of Examples 1 to 4, as the (C) component, core-shell type rubber particles were used, but the peel strength was remarkably raised along with the increase in the amount of addition of the (C) component over the peel strength 7.1N of Comparative Example 6 compared against for adhesiveness. In Example 4 containing the (C) component in 23.4 parts by mass, a five times or more greater peel strength of 37.8N could be achieved.

In Comparative Examples 9 to 11 and Examples 5, 6, 16, and 17, the effect is shown of the case of addition of an acryl-based block copolymer as the (C) component. Specifically, in the case of an acryl-based block copolymer as well, in the same way as the case of core-shell type rubber particles, it is only in Examples 5, 6, 16, and 17 in which the (B) component and (C) component are jointly used that that a high vibration attenuation property is exhibited in not only the low temperature region, but also the high temperature region and therefore the applicable temperature region of the vibration attenuation property can be expanded and was expanded. In particular, it is learned that if adding an acryl-based block copolymer as the (C) component, an extremely high loss factor is obtained at both of the low temperature region and high temperature. Further, in each of Examples 16 and 17, the amount of addition of an acryl-based block copolymer as the (C) component is increased greatly compared with Examples 5 and 6, but in this case as well, it is learned that a high loss factor is sufficiently maintained in both of the low temperature region and high temperature region and further the adhesiveness is also improved. On the other hand, in each of Comparative Examples 12 to 14 where the (B) component was not added but an acryl-based block copolymer was added as a (C) component in an amount increased over Comparative Examples 10 and 11, the loss factor in the high temperature region was improved, but since the (B) component was not added, in all of Comparative Examples 12 to 14, a sufficient loss factor could not be obtained at the low temperature region. From these results, it is learned that by adding an acryl-based block copolymer as a (C) component, it is possible to remarkably improve the vibration attenuation property, but such an effect is not obtained by the (C) component alone, but is obtained by joint use with the (B) component.

Next, in each of Examples 7 to 10, the effect in the case of adding both core-shell type rubber particles and an acryl-based block copolymer as the (C) component is shown. Specifically, in each of Examples 7 to 10, the acryl-based block copolymer is added in substantially constant amounts while the core-shell type rubber particles are added in increasing amounts. In this case, it was possible to obtain a high loss factor in both of the low temperature region and high temperature region, but no remarkable improvement in vibration attenuation property such as shown in Examples 5, 6, 16, and 17 was observed. However, by adding core-shell type rubber particles, a tendency for the adhesiveness to remarkably increase along with an increase in the amount added was observed.

In each of Comparative Examples 15 and 16 and Example 11 where the type of the (B) component was changed as well, similarly, only in Example 11 where the (B) component and the (C) component were jointly used was it possible to improve the adhesiveness while achieving a high loss factor at both the low temperature region and high temperature region and therefore possible to expand the applicable temperature range of the vibration attenuation property.

Examples 12 to 15, 18, and 19 show the effect in the case of adding the (B) component in more than 100 parts by mass. By adding the (B) component in a large amount, it was possible to greatly raise the vibration attenuation property in particular in the low temperature region. Further, in the case of adding the (B) component in a large amount, if not adding the (C) component, peeling occurred and it was not possible to suitably produce the T-shaped peel test piece used for comparison. However, while a tendency was observed of the adhesiveness falling along with an increase in the amount of addition of the (B) component in Examples 12 to 15, 18, and 19, even if the case of Example 19 where the (B) component was added in 200 parts by mass, it was possible to maintain a high adhesiveness by joint use of the (C) component.

REFERENCE SIGNS LIST

1, 10 cured product of epoxy resin composition
2 epoxy resin
3 rosin-based resin

**Claims**

1. An epoxy resin composition comprising a main agent containing an epoxy resin (A), a rosin-based resin (B) and a modifier for the epoxy resin (C), and a curing agent (D).

2. The epoxy resin composition according to claim 1, wherein the modifier for the epoxy resin (C) includes at least one selected from core-shell type rubber particles and an acryl-based block copolymer.

3. The epoxy resin composition according to claim 1 or 2, wherein the curing agent (D) includes an amine-based curing agent.

4. The epoxy resin composition according to claim 3, wherein the curing agent (D) includes dicyandiamide.

5. The epoxy resin composition according to any one of claims 1 to 4, wherein the rosin-based resin (B) is 10 to 180 parts by mass and the modifier for the epoxy resin (C) is 1 to 90 parts by mass with respect to 100 parts by mass of the epoxy resin (A).

6. The epoxy resin composition according to claim 5, wherein the rosin-based resin (B) is 40 to 180 parts by mass and the modifier for the epoxy resin (C) is 10 to 50 parts by mass with respect to 100 parts by mass of the epoxy resin (A).

7. A method of production of an epoxy resin composition comprising following steps 1 to 3:

step 1: mixing a curing agent (D) with a part of an epoxy resin (A) to prepare a resin composition,
step 2: charging the epoxy resin (A), a rosin-based resin (B) and a modifier for the epoxy resin (C) into a melting container and heating and mixing them at 140 to 170°C for 1 to 6 hours to obtain a master batch based on the melted (B) and (C) components, and
step 3: cooling the master batch obtained at step 2 to 50 to 70°C, then adding the resin composition obtained at step 1 and mixing them at 50 to 70°C for 0.5 to 2 hours to obtain an epoxy resin composition.

8. The method of production of an epoxy resin composition according to claim 7, wherein the rosin-based resin (B) is 10 to 180 parts by mass and the modifier for the epoxy resin (C) is 1 to 90 parts by mass with respect to 100 parts by mass of the epoxy resin (A).

9. The method of production of an epoxy resin composition according to claim 8, wherein the rosin-based resin (B) is 40 to 180 parts by mass and the modifier for the epoxy resin (C) is 10 to 50 parts by mass with respect to 100 parts by mass of the epoxy resin (A).

# Fig. 1

# Fig. 2

# Fig. 3

## INTERNATIONAL SEARCH REPORT

| International application No. |
|---|
| **PCT/JP2024/011593** |

### A. CLASSIFICATION OF SUBJECT MATTER

*C08L 63/00*(2006.01)i; *C08J 3/22*(2006.01)i; *C08L 51/04*(2006.01)i; *C08L 53/00*(2006.01)i; *C08L 93/04*(2006.01)i
FI:  C08L63/00 A; C08L93/04; C08L51/04; C08L53/00; C08J3/22 CFC

According to International Patent Classification (IPC) or to both national classification and IPC

### B. FIELDS SEARCHED

Minimum documentation searched (classification system followed by classification symbols)

C08L63/00; C08J3/22; C08L51/04; C08L53/00; C08L93/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-086375 A (DAICEL CORP.) 07 May 2015 (2015-05-07)<br>table 1, example 9, etc. | 1-4 |
| X | JP 2003-082064 A (HARIMA CHEMICALS, INC.) 19 March 2003 (2003-03-19)<br>examples 9-10, etc. | 1-2, 5 |
| X | CN 106047279 A (HEFEI DONGCAI PRINTING TECHNOLOGY CO., LTD.) 26 October 2016 (2016-10-26)<br>examples 1-5, etc. | 1, 3, 5-6 |
| X | CN 104403556 A (LI, Yongzhi) 11 March 2015 (2015-03-11)<br>examples 1-3, etc. | 1, 3 |
| A | JP 2011-148881 A (THE YOKOHAMA RUBBER CO., LTD.) 04 August 2011 (2011-08-04) | 1-9 |
| A | JP 2002-030122 A (TECHNO POLYMER CO., LTD.) 31 January 2002 (2002-01-31) | 1-9 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/011593** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2022-0141359 A (JEILHI-TECHPOLYMER CO., LTD.) 20 October 2022 (2022-10-20) | 1-9 |
| A | WO 2019/087877 A1 (NIPPON STEEL CHEMICAL & MATERIAL CO., LTD.) 09 May 2019 (2019-05-09) | 1-9 |

**INTERNATIONAL SEARCH REPORT**
Information on patent family members

International application No.

**PCT/JP2024/011593**

| Patent document cited in search report | | | Publication date (day/month/year) | Patent family member(s) | | | Publication date (day/month/year) |
|---|---|---|---|---|---|---|---|
| JP | 2015-086375 | A | 07 May 2015 | (Family: none) | | | |
| JP | 2003-082064 | A | 19 March 2003 | (Family: none) | | | |
| CN | 106047279 | A | 26 October 2016 | (Family: none) | | | |
| CN | 104403556 | A | 11 March 2015 | (Family: none) | | | |
| JP | 2011-148881 | A | 04 August 2011 | (Family: none) | | | |
| JP | 2002-030122 | A | 31 January 2002 | (Family: none) | | | |
| KR | 10-2022-0141359 | A | 20 October 2022 | (Family: none) | | | |
| WO | 2019/087877 | A1 | 09 May 2019 | US | 2021/0179841 | A1 | |
| | | | | EP | 3705508 | A1 | |
| | | | | CN | 111295406 | A | |

Form PCT/ISA/210 (patent family annex) (July 2022)

**EP 4 685 186 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019087877 A
- JP 3000759 A